Europäisches Patentamt

European Patent Office

Office européen des brevets

(19)

(11) Veröffentlichungsnummer: **0 172 557**
**A1**

## EUROPÄISCHE PATENTANMELDUNG

(21) Anmeldenummer: 85110432.3

(22) Anmeldetag: 20.08.85

(51) Int. Cl.⁴: **F16H 33/02**

(30) Priorität: 22.08.84 DE 3430812

(43) Veröffentlichungstag der Anmeldung:
26.02.86 Patentblatt 86/09

(84) Benannte Vertragsstaaten:
AT FR GB IT SE

(71) Anmelder: **Graeber, Ludwig**
**Schanzstrasse 21**
**D-6732 Edenkoben/Pfalz(DE)**

(72) Erfinder: **Graeber, Ludwig**
**Schanzstrasse 21**
**D-6732 Edenkoben/Pfalz(DE)**

(74) Vertreter: **Patentanwälte Dipl.-Ing. F.W. Möll**
**Dipl.-Ing. H.Ch. Bitterich**
**Langstrasse 5 Postfach 2080**
**D-6740 Landau(DE)**

(54) **Drehzahl- und Drehmomentwandler.**

(57) Auf der Antriebsachse (1) sitzt eine Nabe (2), an deren Umfang Schwenklager (3) gleichmäßig verteilt sind. An den Schwenklagern (3) sind über Schwenkbolzen (4) Fliehgewichte (6) mit Hilfe von Drehlagern (5) gelagert. Unter der Wirkung der Fliehkraft legen sich die Fliehgewichte (6) an einen Innenkäfig (7), der exzentrisch gelagert ist. Mit dem Innenkäfig (7) ist die Abtriebswelle (8) über Drehlager (9) verbunden. Bei einer Drehzahldifferenz zwischen Antriebswelle (1) und Abtriebswelle (8) werden die Fliehgewichte (6) zyklisch in radialer Richtung, d. h. zur Antriebsachse (1) hin bzw. von der Antriebsachse (1) weg, beschleunigt. Die dadurch ausgelösten Kräfte nehmen den Innenkäfig (7) in Drehrichtung mit. Mit zunehmender Drehzahldifferenz zwischen Antriebsachse (1) und Abtriebsachse (8) nimmt die Zahl der Beschleunigungsvorgänge pro Zeiteinheit zu und damit auch das an der Abtriebsachse (8) abnehmbare Drehmoment.

Fig.1

EP 0 172 557 A1

Drehzahl- und Drehmomentwandler

Die Erfindung betrifft eine Vorrichtung zum selbsttätigen, stufenlosen Wandeln von Drehmoment und Drehzahl, enthaltend eine Antriebswelle, mit der mehrere Fliehgewichte in radialer Richtung frei beweglich verbunden sind, eine Abtriebswelle und wenigstens einen die Antriebswelle umschließenden Innenkäfig, dessen Abstand zur Antriebswelle - über den Umfang der Antriebswelle gesehen - variiert und an den sich die Fliehgewichte unter der Wirkung der Fliehkraft anlegen.

Drehzahl- und Drehmomentwandler sind bekannt. Sie dienen dazu, Drehzahl und Drehmoment einer Antriebsmaschine an Drehzahl- und Drehmomentbedarf eines anzutreibenden Aggregats anzupassen.

Bekannt sind beispielsweise nach dem hydrodynamischen Prinzip arbeitende Drehmomentwandler. Hier stehen in einem Gehäuse zwei mit turbinenartigen Schaufeln ausgerüstete Räder koaxial nebeneinander, wobei das eine Rad mit der Antriebswelle, das andere Rad mit der Abtriebswelle verbunden ist. Die kraftmäßige Verbindung zwischen den beiden Rädern erfolgt über eine Hydraulik-Flüssigkeit, die vom angetriebenen Rad in Bewegung versetzt wird und diese Bewegungsenergie auf das abgetriebene Rad überträgt. Ein dritter, feststehender Schaufelkranz erzeugt das zur Drehmomenterhöhung erforderliche Stützmoment.

Bekannt sind ferner mechanisch arbeitende Wandler, die beispielsweise mit einem Keilriemen und zwei veränderlichen Riemenscheiben arbeiten. Die Riemenscheiben sind derart veränderlich, daß der Keilriemen auf unterschiedlichen Durchmessern abrollt. Die Verstellung der Riemenscheiben erfolgt beispielsweise über Fliehgewichte, die auf der angetriebenen Riemenscheibe sitzen. Die abgetriebene Riemenscheibe steht unter der Wirkung einer Feder und verstellt sich entsprechend selbsttätig. Durch den räumlichen Versatz zwischen Antriebs- und Abtriebswelle wird das erforderliche Stützmoment erzeugt.

Der hydrodynamische Wandler arbeitet praktisch verschleißfrei und kann auch als selbsttätig wirkende Kupplung eingesetzt werden. Seine Herstellung ist jedoch relativ aufwendig und er muß gegen Verlust an Hydraulikflüssigkeit abgedichtet werden. Der weiter beschriebene mechanisch arbeitende Wandler mit Riemenantrieb ist dagegen sehr verschleißbehaftet; um den Verschleiß in Grenzen zu halten, ist eine zusätzliche Kupplung erforderlich. Außerdem benötigt das Riemengetriebe unverhältnismäßig viel Platz.

Aus der US-PS 4336870 ist eine mechanisch wirkende Konstruktion bekannt, die als Fliehkraftkupplung und Drehzahlwandler wirkt. Bei einer Drehzahldifferenz zwischen Antriebs- und Abtriebswelle gleiten oder rollen die Fliehgewichte an einem unrunden Käfig entlang. Dies bedingt erhebliche Reibungsverluste und Abnützung.

Der vorliegenden Erfindung liegt die Aufgabe zugrunde, einen mechanisch wirkenden Drehzahl- und Drehmomentwandler anzugeben, der einfach herzustellen ist, einen kompakten Aufbau ermöglicht und eine verlustarme Kraftübertragung von der Antriebsachse zur Abtriebsachse ermöglicht.

Diese Aufgabe wird dadurch gelöst, daß der Innenkäfig einen kreisrunden Querschnitt aufweist, exzentrisch zur Antriebswelle montiert ist und mit der Abtriebswelle über Drehlager in Verbindung steht.

Die Wirkungsweise dieser Vorrichtung beruht auf dem unterschiedlichen Energie inhalt der Fliehgewichte infolge des variierenden Abstandes zur Antriebsache. Bei sich drehender Antriebsachse preßt die Fliehkraft die Fliehgewichte nach außen. Dabei nehmen sie Energie auf. Wird die Abtriebswelle, die mit dem Innenkäfig über Drehlager in Verbindung steht, nicht abgebremst, so verändern die Fliehgewichte ihre Lage nicht und Antriebswelle, Innenkäfig und Abtriebswelle rotieren mit identischer Drehzahl. Wird die Abtriebswelle abgebremst, so wird auch der Innenkäfig gebremst und die Fliehgewichte entsprechend zyklisch zur Antriebswelle hin beschleunigt. Dabei geben sie ihre Energie an den Innenkäfig ab. Dabei treten Kräfte auf, die den Innenkäfig mitnehmen. Je stärker die Abtriebswelle abgebremst wird und je größer damit der Drehzahlunterschied zwischen Antriebswelle und Abtriebswelle ist, desto öfter nehmen die Fliehgewichte pro Zeiteinheit Antriebsenergie auf und geben sie an die Abtriebswelle bzw. den Innenkäfig ab, desto größer werden die den Innenkäfig mitnehmenden Kräfte und desto größer wird das an der Abtriebswelle abnehmbare Drehmoment. Dreht die Antriebsachse sehr langsam bzw. bleibt sie stehen, so wird der Innenkäfig nicht mehr angetrieben, der erfindungsgemäße Wandler wirkt auch als selbsttätige Fliehkraftkupplung.

Prinzipiell kann man sagen, daß mit zunehmendem Verhältnis zwischem maximalem und minimalem Abstand zwischen Antriebswelle und Innenkäfig die übertragbaren Kräfte zunehmen. Wählt man Abstandsverhältnis bzw. Exzentrizität jedoch zu hoch, so werden die Fliehgewichte so stark zum Zentrum hin beschleunigt, daß die nach außen gerichtete Wirkung der Fliehkraft kompensiert und sogar überkompensiert wird. In einem solchen Fall würden die Fliehgewichte zeitweise vom Innenkäfig abheben und anschließend gegebenenfalls mit großer Wucht wieder auf den Innenkäfig aufschlagen, wodurch unerwünschte Verschleißerscheinungen auftreten.

Dieser zuletzt beschriebene, unerwünschte Effekt läßt sich gemäß einer vorteilhaften Weiterbildung der Erfindung durch eine Zwangsführung der Fliehgewichte an der Innenseite des Innenkäfigs beseitigen.

Überraschenderweise funktioniert diese Kraftübertragung trotz des Drehlagers zwischen Innenkäfig und Abtriebswelle. Hierbei wird die relativ aufwendige Herstellung von Innenkäfigen mit unrundem Querschnitt vermieden. Außerdem führen die Fliehgewichte gegenüber dem Innenkäfig praktisch keine Relativbewegung mehr aus.

Die durch den exzentrisch gelagerten Innenkäfig ausgelösten Unwuchtkräfte werden durch Unwucht-Ausgleichsgewichte oder aber bevorzugt durch die Anordnung von mehreren Innenkäfigen mit sich gegenseitig kompensierende Exzentrizität reduziert.

Vorzugsweise sind die Fliehgewichte als Kreiszylinder ausgebildet und an Schwenkbolzen befestigt, die ihrerseits auf einer auf der Antriebswelle befestigten Nabe schwenkbar gelagert sind. Diese Ausführungsform ist besonders einfach herzustellen.

Führen die Fliehgewichte nur eine geringe Relativbewegung gegenüber dem Innenkäfig aus oder ist durch eine richtige Abstimmung des Radius des Innenkäfigs, der Exzentrizität von Innenkäfig und Antriebsachse und des Radius der den Innenkäfig berührenden Fläche der Fliehgewichte diese Relativbewegung in eine Abwälzbewegung überführt, so können die Fliehgewichte mit den Schwenkbolzen starr verbunden sein. Andernfalls werden die Fliehgewichte an den Schwenkbolzen drehbar gelagert. Sie können dann auf der Innenfläche des Innenkäfigs rollen.

Gemäß einer Weiterbildung ist koaxial zur Antriebswelle ein Außenkäfig gelagert, der mit der Abtriebswelle fest verbunden ist, wobei der Außenkäfig wenigstens zwei Stirnbleche aufweist, an denen die den Innenkäfigen zugeordneten Drehlager befestigt sind.

Anhand der Zeichnung soll die Erfindung in Form von Auführungsbeispielen näher erläutert werden. Es zeigen

Fig. 1 einen Längsschnitt durch eine Ausführungsform eines mechanisch arbeitenden Drehmoment- und Drehzahlwandlers in schematischer Darstellung,

Fig. 2 einen Querschnitt durch die Ausführungsform der Fig. 1 entlang der Linie II-II,

Fig. 3 einen weiteren Querschnitt durch die Ausführungsform der Fig. 1 entlang der Linie III-III und

Fig. 4 eine abgewandelte Ausführungsform der in Fig. 2 dargestellten Konstruktion.

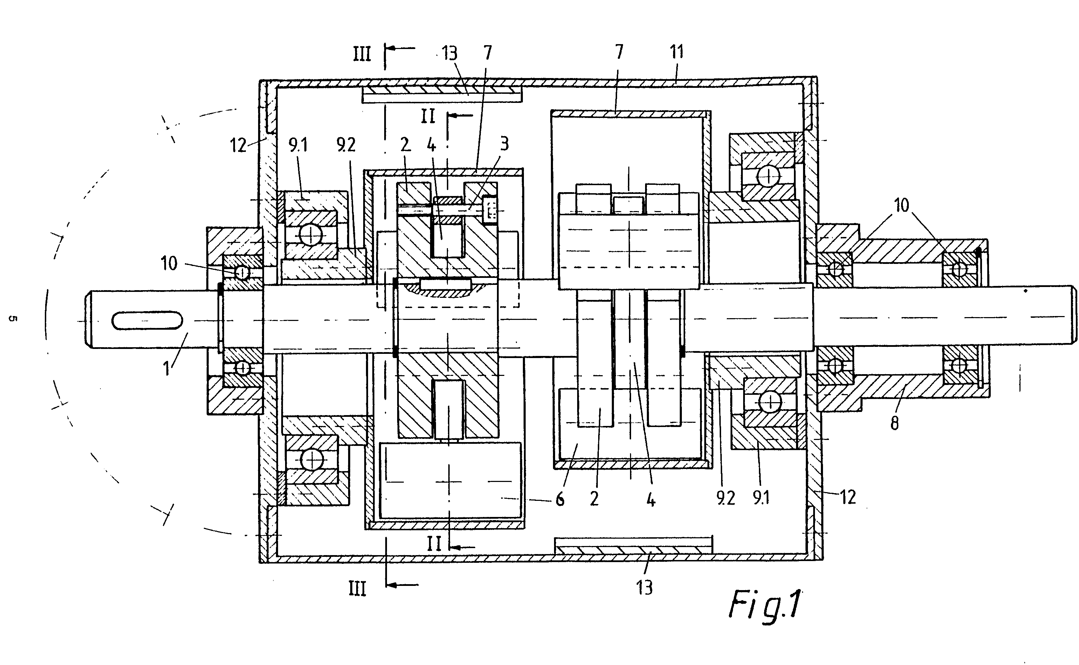

Fig. 1 zeigt einen Längsschnitt durch eine Ausführungsform eines Drehzahl- und Drehmomentenwandlers, die sich dadurch auszeichnet, daß der Innenkäfig einen kreisrunden Querschnitt besitzt und exzentrisch gelagert ist. Es sind zwei sich gegenseitig kompensierende Innenkäfige 7 vorgesehen. Man erkennt im Zentrum der Vorrichtung die Antriebswelle 1 sowie die mit Hilfe von Kugellagern 10 koaxial darauf gelagerte Abtriebswelle 8. Mit der Abtriebswelle 8 fest verbunden ist ein Außenkäfig 11 mit zwei Stirnblechen 12. Der Außenkäfig 11 ist ebenfalls koaxial zur Antriebswelle 1 gelagert.

Wälzlager 9 sind mit Hilfe einer Halterung 9.1 an der Innenseite der Stirnbleche 12 exzentrisch befestigt. Die Innenringe der Wälzlager 9 sind über eine weitere Halterung 9.2 mit den Innenkäfigen 7 fest verbunden. Die Wälzlager 9 und die Innenkäfige 7 sind zueinander koaxial. Die Innenkäfige 7 umfassen auch hier jedenfalls abschnittsweise die Antriebswelle 1.

Im Bereich der Innenkäfige 7 ist auf der Antriebsachse 1 eine Nabe 2 befestigt. Am Umfang der Nabe 2 sind Schwenklager 3 vorgesehen, an denen Schwenkbolzen 4 schwenkbar befestigt sind. Am vorderen Ende der Schwenkbolzen 4 sind Fliehgewichte 6 starr befestigt. Die Fliehgewichte 6 legen sich unter der Wirkung der Fliehkraft an die Innenseite der Innenkäfige 7 an und erzeugen bei ihrer durch die Exzentrizität zwischen Antriebsachse 1 und Innenkäfig 7 ausgelösten radialen Beschleunigung die den Innenkäfig 7 in Drehung versetzenden Kräfte.

Bei der dargestellten Ausführung mit zwei um 180° gegeneinander exzentrisch verschobenen Innenkäfigen 7 kompensieren sich die erzeugten Unwuchtkräfte gegenseitig. Sollte nur ein Innenkäfig verwendet werden, so können die dadurch ausgelösten Unwuchtkräfte durch geeignete Gegengewichte 13 reduziert werden.

Bei der dargestellten Ausführungsform führen die Fliehgewichte 6 keine Relativbewegung gegenüber dem Innenkäfig 7 aus. Der Drehzahlausgleich zwischen Antriebsachse 1 bzw. Innenkäfig 7 und Abtriebsachse 8 erfolgt in den Wälzlagern 9.

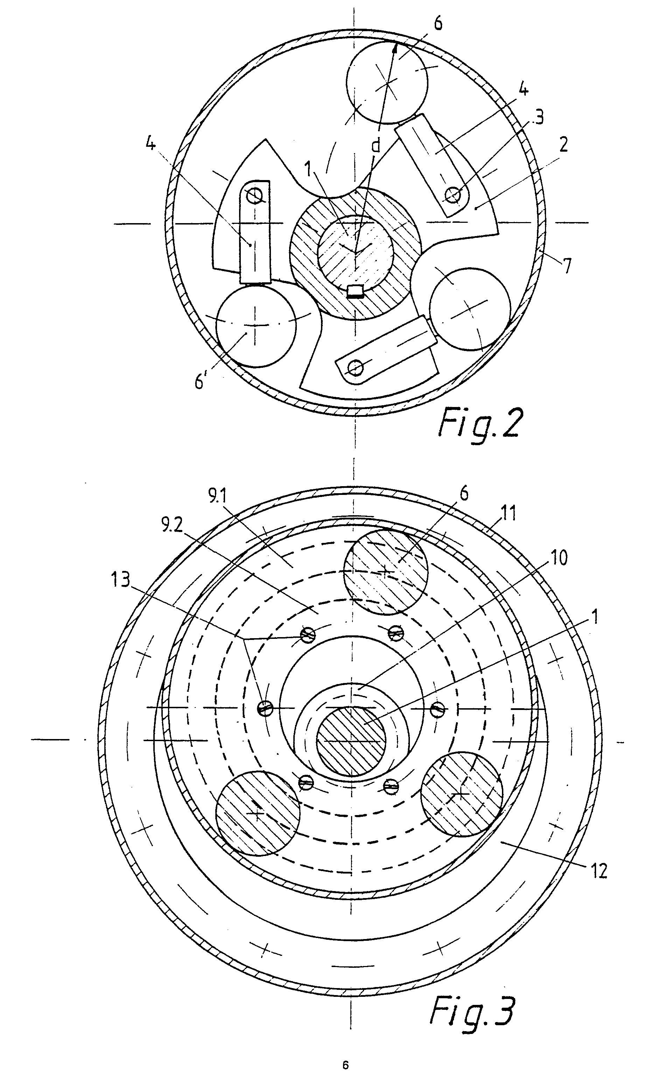

Wie anhand der Fig. 2 zu erkennen ist, findet bei ungünstigen Maßverhältnissen eine kleine Relativbewegung zwischen den Fliehgewichten 6 und dem Innenkäfig 7 statt. Die dabei entstehenden unerwünschten Reibungskräfte und Reibungsverluste können durch geeignete Schmiermittel, durch eine Drehlagerung der Fliehgewichte, durch eine veränderte Lagerung der Schwenkbolzen 4 und/oder durch eine Anpassung des Durchmessers der Fliehgewichte an den Durchmesser des Innenkäfigs und die Exzentrizität weiter verringert werden.

In Fig. 2 erkennt man einen Querschnitt durch die Ausführungsform der Fig. 1 entlang der Linie II-II. Man erkennt die Antriebsachse 1, auf der die mit Aussparungen für die Fliehgewichte 6 ausgerüstete Nabe 2 befestigt ist. Man erkennt ferner die Schwenklager 3 am Umfang der Nabe 1 sowie die Schwenkbolzen 4, an deren vorderem Ende die Fliehgewichte 6 starr befestigt sind.

Bei ihrem Umlauf um die Antriebsachse 1 verändern die Fliehgewichte 6 zyklisch ihren Abstand d zur Antriebsachse 1 und damit ihren Energieinhalt. Die durch diese radiale Beschleunigung auf den Innenkäfig 7 ausgeübten Kräfte nehmen den Innenkäfig 7 mit, wobei auch hier mit zunehmender Drehzahldifferenz zwischen Antriebsachse 1 und Abtriebsachse 8 die Zahl der Beschleunigungsvorgänge pro Zeiteinheit und damit das an der Abtriebsachse 8 abnehmbare Drehmoment ansteigen. Der Drehzahlausgleich zwischen Antriebsachse 1 und Abtriebsachse 8 erfolgt wie schon erwähnt nicht zwischen den Fliehgewichten 6 und dem Innenkäfig 7, sondern im Wälzlager 9.

Fig. 3 zeigt einen weiteren Querschnitt durch die Ausführungsform der Fig. 1 entlang der Linie III-III. Man erkennt den Außenkäfig 11 sowie die Innenseite eines Stirnblechs 12. Man erkennt ferner die exzentrische Lagerung des Innenkäfigs 7, der mit Hilfe von Schrauben 13 mit der Lagerbefestigung 9.2 verschraubt ist. Ferner erkennt man die drei Fliehgewichte 6, die Antriebsachse 1 sowie das Lager 10 zwischen Antriebsachse 1 und Außenkäfig 11, 12.

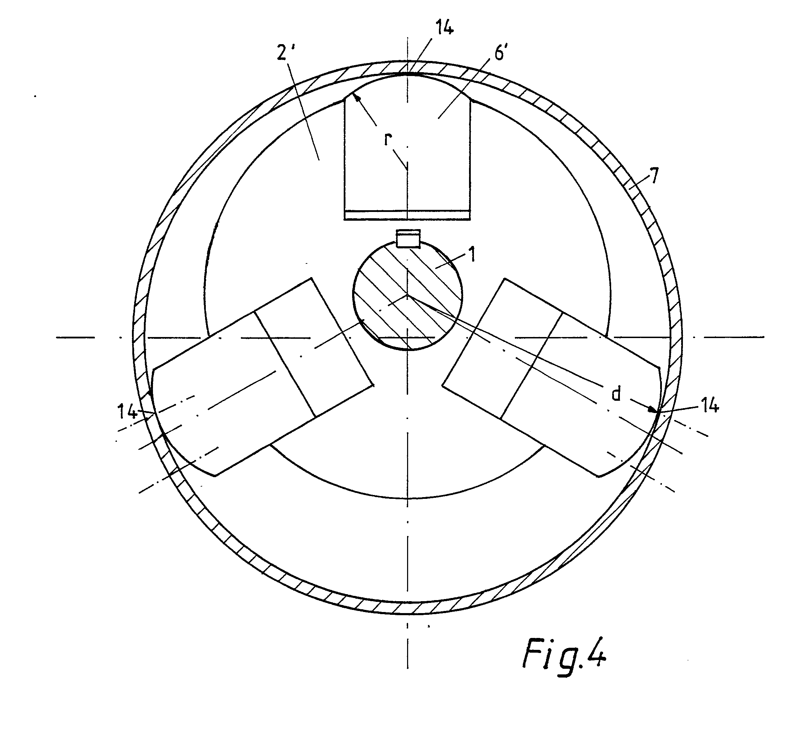

Fig. 4, die an Fig. 2 angelehnt ist, zeigt die Lagerung der Fliehgewichte 6' in Radialführungen in der Nabe 2'. Anhand der Fig. 4 läßt sich sehr gut erkennen, daß der Berührungspunkt 14 der Fliehgewichte 6' mit dem Innenkäfig 7 zyklisch um die Mittelachse der Fliehgewichte 6' pendelt. Diese Relativbewegung kann bei richtiger Anpassung des Radius r der Berührungsfläche der Fliehgewichte 6' an den Durchmesser des Innenkäfigs 7 und an die Exzentrizität zwischen Antriebsachse 1 und Innenkäfig 7 in eine reine Abwälzbewegung umgewandelt werden, die naturgemäß besonders reibungsarm ist.

Bei der dargestellten Ausführungsform kann nicht übersehen werden, daß die Lager 9 einer starken Kippbelastung ausgesetzt sind, ausgelöst durch die Exzentrizität des Innenkäfigs 7 in Verbindung mit dem als Hebelarm wirkenden Abstand zwischen dem Lager 9 und dem Wirkungszentrum der Fliehgewichte 6. Man wird deshalb anstelle von Kugellagern besser Nadellager verwenden. Eine weitere Verbesserung läßt sich dadurch erreichen, daß zwischen die beiden Innenkäfige 7 ein drittes Stirnblech eingebracht wird, an dem rechts und links weitere Lager befestigt werden, welche die Innenkäfige auch an dem jetzt noch freien Ende abstützen.

Mit Hilfe von weiteren Stirnblechen im Inneren des Außenkäfigs können auch noch weitere Innenkäfige mit entsprechenden Fliehgewichten auf der Antriebsachse vorgesehen werden. Auf diese Weise ist neben einer Steigerung der Wandlerleistung hauptsächlich ein feinerer Ausgleich der Unwuchtkräfte möglich.

Abschließend soll nochmals darauf hingewiesen werden, daß die Wirkung des erfindungsgemäßen Drehmomentwandlers nicht auf einer Reibung zwischen den Fliehgewichten und dem Innennkäfig beruht. So haben Versuche mit einem gemäß den Fig. 1 bis 3 ausgebildeten Modell gezeigt, daß auch nach stundenlangem Betrieb des Wandlers bei festgebremster Abtriebswelle der Außenkäfig nur handwarm wurde. Eine Revision des Versuchsmusters nach vielstündigem Betrieb hat ferner gezeigt, daß weder Innenkäfig noch Fliehgewichte sichtbare Abnutzungserscheinungen aufweisen. Die Reibungsverluste des Wandlers entsprechen bestenfalls den Reibungsverlusten eines herkömmlichen Zahnradgetriebes. Auch läßt sich der Wandler in beiden Drehrichtungen betreiben.

## Ansprüche

1. Vorrichtung zum selbsttätigen stufenlosen Wandeln von Drehmoment und Drehzahl, enthaltend eine Antriebswelle (1), mit der mehrere Fliehgewichte (6) in radialer Richtung frei beweglich verbunden sind, eine Abtriebswelle (8) und wenigstens einen die Antriebswelle (1) umschließenden Innenkäfig (7), dessen Abstand zur Antriebswelle (1) - über den Umfang der Antriebswelle (1) gesehen - variiert und an den sich die Fliehgewichte (6) unter der Wirkung der Fliehkraft anlegen, dadurch gekennzeichnet, daß der Innenkäfig (7) einen kreisrunden Querschnitt aufweist, exzentrisch zur Antriebswelle (1) montiert ist und mit der Abtriebswelle (8) über Drehlager (9) in Verbindung steht.

2. Vorrichtung nach Anspruch 1, dadurch gekennzeichnet, daß mehrere Innenkäfige (7) mit sich gegenseitig kompensierender Exzentrizität vorgesehen sind.

3. Vorrichtung nach Anspruch 1 oder 2, dadurch gekennzeichnet, daß Unwucht-Ausgleichsgewichte (14) vorgesehen sind.

4. Vorrichtung nach Anspruch 1,2 oder 3, dadurch gekennzeichnet, daß Antriebswelle (1) und Abtriebswelle (8) koaxial gelagert sind.

5. Vorrichtung nach Anspruch 4, dadurch gekennzeichnet, daß die Abtriebswelle (8) als Hohlwelle auf der Antriebswelle (1) gelagert ist.

6. Vorrichtung nach wenigstens einem der Ansprüche 1 bis 5, dadurch gekennzeichnet, daß auf der Antriebswelle (1) eine Nabe (2, 2') befestigt ist, an deren Umfang die Fliehgewichte (6, 6') gelagert sind.

7. Vorrichtung nach wenigstens einem der Ansprüche 1 bis 6, dadurch gekennzeichnet, daß die Fliehgewichte (6) schwenkbar gelagert sind.

8. Vorrichtung nach wenigstens einem der Ansprüche 1 bis 7, dadurch gekennzeichnet, daß die Fliehgewichte (6) als Kreiszylinder ausgebildet und an Schwenkbolzen (4) befestigt sind.

9. Vorrichtung nach Anspruch 8, dadurch gekennzeichnet, daß die Fliehgewichte (6) an den Schwenkbolzen (4) drehbar gelagert sind.

10. Vorrichtung nach wenigstens einem der Ansprüche 1 bis 9, dadurch gekennzeichnet, daß die Fliehgewichte (6, 6') am Innenkäfig (7) zwangsgeführt sind.

11. Vorrichtung nach wenigstens einem der Ansprüche 1 bis 10, dadurch gekennzeichnet, daß koaxial zur Antriebswelle (1) ein Außenkäfig (11) gelagert ist, der mit der Abtriebswelle (8) fest verbunden ist, daß der Außenkäfig (11) wenigstens zwei Stirnbleche (12) aufweist, und daß die den Innenkäfigen (7) zugeordneten Drehlager (9) an den Stirnblechen (12) befestigt sind.

Fig.1

0 172 557

*Fig.2*

*Fig.3*

Fig.4

## EINSCHLÄGIGE DOKUMENTE

EP 85110432.3

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | US - A - 4 336 870 (SHEA)<br>* Gesamt *<br>-- | 1,4-7,<br>10,11 | F 16 H 33/02 |
| A | US - A - 4 195 721 (SHEA)<br>* Gesamt *<br>-- | 1,4-7,<br>10,11 | |
| A | FR - A - 1 246 192 (KEYSER)<br>* Fig. 1,2; Seite 2, rechte Spalte, 1. Absatz *<br>-- | 7,8,9 | |
| A | AT - B - 235 651 (LOOS)<br>* Gesamt *<br>-- | | |
| A | DD - A - 58 653 (SCHRÖDER)<br>* Gesamt *<br>-- | | **RECHERCHIERTE SACHGEBIETE (Int. Cl.4)** |
| A | FR - A - 767 313 (RICCARDI)<br>* Gesamt *<br>-- | | F 16 D 43/00<br>F 16 H 25/00<br>F 16 H 33/00 |
| A | FR - A - 1 246 885 (LABARTHE)<br>* Gesamt *<br>-- | | F 16 H 35/00 |
| A | GB - A - 729 860 (O'HARA)<br>* Gesamt *<br>-- | | |
| A | US - A - 1 826 172 (GREENWALD)<br>* Gesamt *<br>-- | | |

Der vorliegende Recherchenbericht wurde für alle Patentansprüche erstellt.

| Recherchenort | Abschlußdatum der Recherche | Prüfer |
|---|---|---|
| WIEN | 13-11-1985 | SCHATEK |

**Europäisches Patentamt**

| | EINSCHLÄGIGE DOKUMENTE | | EP 85110432.3 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | US - A - 2 564 211 (O'HARA) <br> * Gesamt * <br> ---- | | |
| | | | **RECHERCHIERTE SACHGEBIETE (Int. Cl. 4)** |

Der vorliegende Recherchenbericht wurde für alle Patentansprüche erstellt.

| Recherchenort | Abschlußdatum der Recherche | Prüfer |
|---|---|---|
| WIEN | 13-11-1985 | SCHATEK |